# EUROPÄISCHE PATENTSCHRIFT

(11) **EP 3 177 505 B1**
(45) Veröffentlichungstag und Bekanntmachung des Hinweises auf die Patenterteilung: **12.09.2018**
(21) Anmeldenummer: 15752968.6
(22) Anmeldetag: 04.08.2015
(51) Int. Cl.: B62D 15/02, B60W 50/08

(54) **BEREITSTELLEN VON FAHRHINWEISEN WÄHREND EINES PARKMANÖVERS**
PROVISION OF DRIVING INSTRUCTIONS DURING A PARKING MANOEUVRE
FOURNITURE D'INSTRUCTIONS DE CONDUITE AU COURS D'UNE MANOEUVRE DE STATIONNEMENT

(30) Priorität: 05.08.2014 DE 102014111128
(43) Veröffentlichungstag der Anmeldung: 14.06.2017
(73) Patentinhaber: Valeo Schalter und Sensoren GmbH, 74321 Bietigheim-Bissingen (DE)
(72) Erfinder: ANOOP, Abraham, 74321 Bietigheim-Bissingen (DE); BARIANT, Jean-Francois, 74321 Bietigheim-Bissingen (DE); GUECHAI, Wael, 74321 Bietigheim-Bissingen (DE); KOSSMANN, Simon, 74321 Bietigheim-Bissingen (DE); SEIFERT, Thorsten, 74321 Bietigheim-Bissingen (DE)
(86) Internationale Anmeldenummer: PCT/EP2015/067895
(87) Internationale Veröffentlichungsnummer: WO 2016/020356

(56) Entgegenhaltungen:
- WO-A1-2014/073193
- DE-A1-102011 082 826
- US-A1- 2002 084 916
- US-A1- 2010 228 426

## Beschreibung

Die Erfindung betrifft ein Verfahren zum Bereitstellen von Fahrhinweisen für einen Fahrer eines Kraftfahrzeugs während eines Parkmanövers. Das Parkmanöver kann das Einparken des Kraftfahrzeugs in eine Parklücke oder das Ausparken aus der Parklücke betreffen. Durch die Fahrhinweise wird dem Fahrer angezeigt, wie er das Kraftfahrzeug gemäß einer geplanten Fahrtrajektorie führen kann, um das Parkmanöver durchzuführen. Das Dokument US2010228426 A1 ist als nächstliegender Stand der Technik nach dem Oberbegriff des Anspruchs 1 zu sehen. Aus der DE 10 2010 034 142 A1 ist hierzu bekannt, mittels eines Bildschirms ein Piktogramm darzustellen, welches dem Fahrer die Lenkrichtung anzeigt, in welche er das Lenkrad drehen soll, um das Kraftfahrzeug in eine Parklücke hineinzuführen. Anstelle der Drehrichtung können auf dem Bildschirm als Piktogramm, zum Beispiel schematisch nur durch Rechtecke, das eigene Kraftfahrzeug und die Parklücke bzw. die Parklücke begrenzende Fahrzeuge angezeigt werden. Zusätzlich wird dann im Piktogramm beim eigenen Fahrzeug durch einen geraden Pfeil vorwärts oder rückwärts dem Fahrer angezeigt werden, in welche Fahrtrichtung er das Kraftfahrzeug führen soll.

Die DE 10 2007 055 389 A1 beschreibt hierzu eine Kollisionsverhinderung bei der Planung einer Fahrtrajektorie zum Einparken eines Kraftfahrzeugs in eine seitliche Parklücke. Die Parklücke wird zunächst detektiert und vermessen (Parklückenvermessung) und eine Fahrtrajektorie auf Basis der Parklückenvermessung durch eine Manöverplanungseinheit berechnet (Bahnplanung). Wenn bei Unterschreiten eines bestimmen Abstands zu einem Hindernis eine Kollision mit diesem Hindernis droht oder bevorsteht, wird eine Information zum Fahrtrichtungswechsel, also von vorwärts auf rückwärts oder umgekehrt, erzeugt. Das Hindernis kann dabei ein die Parklücke begrenzendes Objekt, beispielsweise ein anderes Fahrzeug, oder ein auf der Parklücke befindlicher Gegenstand, wie beispielsweise ein Ball, sein. Der Fahrtrichtungswechsel wird dem Fahrer durch Wechseln der Richtung eines geraden Pfeils in einem Piktogramm angezeigt.

Bei dieser aus dem Stand der Technik bekannten Parkassistenzvorrichtung kann sich das Problem ergeben, dass es zu einer schnellen Abfolge von Fahrtrichtungswechseln kommen kann, dass also der Pfeil im Piktogramm beispielsweise mehrmals in einer Minute zwischen der Vorwärtsrichtung und der Rückwärtsrichtung wechselt. Grund dafür kann beispielsweise sein, dass der Fahrer zunächst der geplanten Fahrtrichtung entlang der Fahrtrajektorie folgt, also der Planfahrtrichtung, und dann aber einem Hindernis zu nahe kommt und deshalb auf der Anzeigeeinheit von der Planfahrtrichtung zur Ausweichfahrtrichtung, also in die entgegengesetzte Richtung, gewechselt wird. Führt der Fahrer dann das Kraftfahrzeug wieder von dem Hindernis weg, vergrößert sich der Abstand zum Hindernis und es wird deshalb wieder zurück zur Planfahrtrichtung gewechselt. Fasst der Fahrer dies wieder als Aufforderung auf, sofort wieder der Planfahrtrichtung zu folgen, wechselt er also wieder die Fahrtrichtung und nähert sich dabei wieder zu sehr dem Hindernis, dann wird wieder zurück auf die Ausweichfahrtrichtung gewechselt, das heißt die Pfeilrichtung wieder umgedreht.

Dieses häufige Wechseln der angezeigten Fahrtrichtung bei einer Parkassistenz aufgrund eines in der ursprünglich geplanten Fahrtrajektorie nicht berücksichtigen Hindernisses kann den Fahrer verwirren.

Der Erfindung liegt die Aufgabe zugrunde, bei einer Parkassistenzvorrichtung einen unerwünscht häufigen Wechsel der angezeigten Fahrtrichtung zu vermeiden.

Diese Aufgabe wird durch die Gegenstände der unabhängigen Patentansprüche gelöst. Vorteilhafte Weiterbildungen der Erfindung ergeben sich durch die Merkmale der abhängigen Patentansprüche.

Das erfindungsgemäße Verfahren zum Bereitstellen der Fahrhinweise für den Fahrer eines Kraftfahrzeugs während eines Parkmanövers setzt auf dem eingangs beschriebenen, aus dem Stand der Technik bekannten Verfahren auf. Es wird also durch eine Manöverplanungseinheit einer Steuereinrichtung des Kraftfahrzeugs eine Fahrtrajektorie geplant, die das bevorstehende Fahrmanöver beschreibt. Durch die Manöverplanungseinheit wird dann in Abhängigkeit von der geplanten Fahrtrajektorie eine Planfahrtrichtung ermittelt und diese mittels einer Anzeigeeinheit dem Fahrer als Fahrhinweis angezeigt. Während der Fahrer dann das Kraftfahrzeug in die angezeigte Fahrtrichtung führt, also querführt (Lenken) und/oder längsführt (Beschleunigen und Abbremsen), wird mittels einer Sensoreinrichtung, beispielsweise mittels eines Ultraschallsensors und/oder Radarsensors und/oder einer Kamera, ein Abstand zu einem Objekt oder Hindernis erfasst, das sich innerhalb der Parklücke und/oder neben der Parklücke befinden kann. Eine Überwachungseinheit der Steuereinrichtung überwacht den erfassten Abstand, d.h. sie erkennt oder signalisiert, falls der erfasste Abstand einen vorbestimmten Abstandswert unterschreitet, also ein Sicherheitsabstand unterschritten wird. Falls der Abstandswert unterschritten ist, wird durch die Überwachungseinheit die mittels der Anzeigeeinheit angezeigte Fahrtrichtung von der Planfahrtrichtung zu einer Ausweichfahrtrichtung gewechselt. Dieser Wechsel wird im Folgenden als initialer Wechsel bezeichnet, weil bei dem Parkmanöver wegen dieses Hindernisses das erste Mal die Ausweichfahrtrichtung angezeigt wird. Es gilt nun, nach diesem initialen Wechsel zu verhindern, dass unerwünscht häufig wegen dieses bereits erkannten Hindernisses zwischen der Ausweichfahrtrichtung und der Planfahrtrichtung gewechselt wird.

Hierzu ist erfindungsgemäß vorgesehen, dass durch die Steuereinrichtung zumindest ein vorbestimmter weiterer Wechsel der angezeigten Fahrtrichtung, wie er jeweils von der Manöverplanungseinheit und/oder der Überwachungseinheit signalisiert werden kann, unterdrückt wird.

Zu der Erfindung gehört auch eine Parkassistenzvorrichtung für ein Kraftfahrzeug, d.h. ein Parkassistenzsystem für ein Kraftfahrzeug. Die Parkassistenzvorrichtung weist die Sensoreinrichtung zum Erfassen eines Abstands zu einem fahrzeugexternen Objekt oder Hindernis auf, also z.B. zu einem anderen Fahrzeug. Bei der Sensoreinrichtung kann die Abstandserfassung in an sich bekannter Weise beispielsweise ultraschallbasiert und/oder radarbasiert und/oder kamerabasiert ausgestaltet sein. Des Weiteren ist eine Steuereinrichtung vorgesehen, die beispielsweise durch ein Steuergerät, d.h. eine ECU (electronic control unit), oder durch mehrere miteinander vernetzte Steuergeräte oder durch eine zentrale Recheneinrichtung des Kraftfahrzeugs bereitgestellt sein kann. Die Steuereinrichtung umfasst die Manöverplanungseinheit und die Überwachungseinheit, die jeweils z.B. als ein Programmmodul einer Prozessoreinrichtung, beispielsweise des genannten Steuergeräts oder einer zentralen Recheneinrichtung, bereitgestellt oder ausgestaltet sein können. Bei der erfindungsgemäßen Parkassistenzvorrichtung ist ein Steuerausgang zum Koppeln der Parkassistenzvorrichtung mit einer Anzeigeeinheit vorgesehen. Beispielsweise kann der Steuerausgang einen Busanschluss zum Anschließen an einen Kommunikationsbus eines Kraftfahrzeugs umfassen. Erfindungsgemäß ist vorgesehen, dass die Steuereinrichtung dazu ausgelegt ist, eine Ausführungsform des erfindungsgemäßen Verfahrens durchzuführen.

Durch die Erfindung ergibt sich der Vorteil, dass nach dem initialen Wechsel, wenn also erkannt wurde, dass es ein Problem mit dem Verfolgen der geplanten Fahrtrajektorie gibt, diese neue Fahrsituation berücksichtigt und dennoch verhindert werden kann, dass auf der Anzeigeeinheit das beschriebene unerwünschte Flackern der angezeigten Fahrtrichtung zwischen der Planfahrtrichtung und der Ausweichfahrtrichtung entsteht. Hierzu wird nach dem initialen Wechsel nicht jeder weitere von der Manöverplanungseinheit und/oder der Überwachungseinheit signalisierte erneute Wechsel der angezeigten Fahrtrichtung zugelassen, insbesondere wenn er mit dem bekannten Hindernis in Zusammenhang steht.

Das Unterdrücken eines vorbestimmten Wechsels erfolgt solange, bis eine vorbestimmte Wechselbedingung erfüllt ist, die insbesondere zeitbezogen und/oder rollstreckenbezogen und/oder fahrtrichtungsbezogen sein kann. Die Wechselbedingung definiert also eine Verzögerung oder einen Hystereseeffekt. Die Überwachungseinheit kann also z.B. mit dem initalen Wechsel noch eine Hysterese oder eine Hystereseeinrichtung der Steuereinrichtung aktivieren. Mit anderen Worten kann die Steuereinrichtung z.B. ein Programmmodul umfassen, durch welches die beschriebene Hystereseeinrichtung realisiert werden kann. Allgemein bewirkt die Hysterese bezogen auf eine Eingangsgröße, hier den erfassten Abstand, ein variant verzögertes Verhalten einer Ausgangsgröße, hier der angezeigten Fahrtrichtung. Es wird also die Ausgangsgröße nicht allein von der unabhängig veränderlichen Eingangsgröße, d.h. dem erfassten Abstand, sondern auch von dem vorherigen Zustand der Ausgangsgröße abhängig gemacht, hier dem bereits durchgeführten initialen Wechsel der angezeigten Fahrtrichtung. Die angezeigte Fahrtrichtung kann also mittels der Hystereseeinrichtung abhängig von der Vorgeschichte (initialer Wechsel bereits erfolgt oder nicht) bei gleicher Eingangsgröße einen von mehreren möglichen Zuständen einnehmen. Wie im Folgenden genauer beschrieben ist, können zum Bereitstellen oder Realisieren der Hysterese unterschiedliche Maßnahmen allein oder in Kombination vorgesehen sein. Beispielsweise kann nach dem initialen Wechsel direkt ein Wechselsignal der Manöverplanungseinheit z.B. für eine vorbestimmte Mindestzeitdauer blockiert oder unterdrückt werden. Es kann auch der beschriebene Abstandswert für den Sicherheitsabstand verändert werden, so dass die Überwachungseinrichtung ihr Wechselsignal zum erneuten Wechseln hin zur Ausweichfahrtrichtung nur bei Unterschreiten des geänderten Sicherheitsabstands erzeugt, was auch einen Hystereseeffekt bewirkt. Die Hystereseeinrichtung stellt also mit anderen Worten eine Verzögerungseinrichtung oder Verzögerungsmittel oder eine Unterdrückungseinrichtung dar, die nach dem initialen Wechsel zur Ausweichfahrtrichtung einen Wechsel zurück zur Planfahrtrichtung und/oder danach einen erneuten nochmaligen Wechsel hin zur Ausweichfahrtrichtung unterdrückt oder verzögert.

Die genannte Wechselbedingung umfasst gemäß einer Ausführungsform der Erfindung zumindest das Hysteresekriterium oder die Bedingung, dass durch ein Getriebe des Kraftfahrzeugs ein Gangwechsel zwischen einem Vorwärtsgang und einem Rückwärtsgang signalisiert wird. Hierbei wird erst ab dem Gangwechsel wieder die Planfahrtrichtung angezeigt. Mit anderen Worten wird nachdem die Information zum initalen Fahrtrichtungswechsel erzeugt wurde und solange kein tatsächlicher Fahrtrichtungswechsel durch Gangwechsel erfolgt, ein Unterdrücken der erneuten Information zum Fahrtrichtungswechsel bewirkt. Hierdurch ergibt sich der Vorteil, dass der Fahrer das Kraftfahrzeug zunächst vom Hindernis wegführen kann und erst nachdem der Fahrer selbst durch den Gangwechsel signalisiert, dass er nun das Parkmanöver fortsetzen möchte, er die entsprechende Planfahrtrichtung angezeigt bekommt. Natürlich kann bei dieser Ausführungsform ein erster Gangwechsel ignoriert werden, der erfolgt, weil der Fahrer das Kraftfahrzeug von der Planfahrtrichtung zunächst in die Ausweichfahrtrichtung führen möchte, er also das Ausweichmanöver einleitet.

Die Wechselbedingung umfasst gemäß einer Ausführungsform der Erfindung zumindest das bereits beschriebene Hysteresekriterium, dass in Bezug auf das Hindernis ein veränderter, insbesondere ein verringerter, Abstandswert zugrundegelegt wird. Mit anderen Worten kann nach dem initialen Wechsel von der Planfahrtrichtung zur Ausweichfahrtrichtung zunächst wieder zur Planfahrtrichtung gewechselt werden, beispielsweise aufgrund des beschriebenen Gangwechsels oder nach einer vorbestimmten Zeitdauer. Dann kann sich der Fahrer aber unter Umständen wieder dem Hindernis nähern. Hierbei wird dann nicht gleich wieder zur Ausweichfahrtrichtung gewechselt. Es wird stattdessen als die Wechselbedingung zumindest überprüft, ob der erfasste Abstand den veränderten Abstandswert unterschreitet, also nicht den ursprünglichen Abstandswert. Erst falls der erfasste Abstand den veränderten Abstandswert unterschreitet, erfolgt ein erneuter Wechsel von der Planfahrtrichtung zur Ausweichfahrtrichtung. Es gibt hierbei die Möglichkeit, den Abstandswert zu vergrößern oder zu verkleinern.

Durch Vergrößern des Abstandswerts ergibt sich der Vorteil, dass der Fahrer schon zu einem früheren Zeitpunkt wieder vor dem Hindernis gewarnt wird, so dass der Fahrer sein Fahrverhalten korrigieren kann und er das Kraftfahrzeug nicht wieder in die ursprüngliche, den initialen Wechsel auslösende Fahrsituation begibt. Dann würde sich die Anzeigesituation entsprechend wiederholen, was einen unnötig häufigen Wechsel der angezeigten Fahrtrichtung zur Folge hätte.

Durch Verringern des Abstands ergibt sich der Vorteil, dass unmittelbar ein überflüssiger Wechsel zur Ausweichfahrtrichtung vermieden wird. Insbesondere bei einem Einparkvorgang in eine Querparklücke wird durch Verringern des Abstandswerts erreicht, dass der Fahrer das eigene Kraftfahrzeug in einer Bogenfahrt an einem neben der Parklücke parkenden Fahrzeug vorbeiführen kann und hierbei den ursprünglichen Abstandswert unterschreitet. Durch den verringerten Abstandswert wird durch dieses Korrekturmanöver kein Wechsel der angezeigten Fahrtrichtung herbeigeführt. Die Überwachungseinrichtung weist eine größere Toleranz auf.

In einer Ausführungsform wird die nach dem initialen Wechsel angezeigte Ausweichfahrtrichtung für eine vorbestimmte Mindestzeitdauer angezeigt. Mit anderen Worten besteht bei dieser Ausführungsform die Wechselbedingung zumindest darin, dass seit dem initialen Wechsel die Mindestzeitdauer abgelaufen sein muss. Diese Ausführungsform kann die zusätzliche Bedingung vorsehen, dass das Hindernis durch die Sensoreinrichtung innerhalb der Parklücke detektiert worden sein muss, also nicht am Rand. Durch eine Mindestzeitdauer kann einem bewegten Hindernis, beispielsweise einem Ball oder vom Wind hoch gewehtem Laub, Rechnung getragen werden.

In einer Ausführungsform wird die Fahrtrajektorie in an sich bekannter Weise in Abhängigkeit von einer aktuellen Position des Kraftfahrzeugs insbesondere zyklisch oder periodisch angepasst. Nach dem initialen Wechsel zur Ausweichfahrtrichtung kann der Fahrer durch Führen des Kraftfahrzeugs entlang der Ausweichfahrtrichtung die relative Lage des Kraftfahrzeugs bezüglich der Parklücke verändern. Hierbei wird dann die geplante Fahrtrajektorie angepasst. Die angepasste Fahrtrajektorie kann dann in vorteilhafter Weise das nun bekannte Hindernis berücksichtigen. Gemäß einer Ausführungsform der Erfindung wird hierbei als Wechselbedingung zumindest überprüft, ob das Hindernis außerhalb eines sich gemäß der aktuell geplanten Fahrtrajektorie ergebenden Fahrschlauchs angeordnet ist. Der Fahrschlauch ist diejenige Fläche, die von dem Kraftfahrzeug überstrichen wird, wenn es der geplanten Fahrtrajektorie folgt. Falls das Hindernis außerhalb des Fahrschlauchs angeordnet ist, wird wieder die Planfahrtrichtung angezeigt. Diese Ausführungsform weist den Vorteil auf, dass der Fahrer die Planfahrtrichtung angezeigt bekommt, sobald eine in Bezug auf das Hindernis kollisionsfreie Fahrtrajektorie ermittelt werden konnte.

Besonders vorteilhaft ist diese Ausführungsform bei innerhalb der Parklücke durch die Sensoreinrichtung detektiertem Hindernis. Eine Weiterbildung dieses Ansatzes sieht vor, dass zum Überprüfen, ob das Hindernis außerhalb des Fahrschlauchs angeordnet ist, auch eine Abmessung des Hindernisses berücksichtigt wird. Diese Größeangabe beruht in vorteilhafter Weise aber auf keiner Messung, weil diese zu lange dauern könnte. Stattdessen wird eine vorbestimmte Form, insbesondere ein Rechteck, also eine Hysteresebox, zum Festlegen der Abmessung des Hindernisses zugrunde gelegt. Dies spart zeitaufwendige Messungen an dem Hindernis.

Die Wechselbedingung umfasst gemäß einer Ausführungsform der Erfindung zumindest, dass eine von dem Kraftfahrzeug nach dem initialen Wechsel zurückgelegte Rollstrecke größer als ein vorbestimmter Streckenwert ist. Falls die Rollstrecke größer als der Streckenwert ist (und insbesondere kein weiteres Hysteresekriterium vorgesehen ist, das noch nicht erfüllt ist), wird wieder die Planfahrtrichtung angezeigt. Mit anderen Worten wird die Planfahrtrichtung erst wieder angezeigt, wenn oder falls der Fahrer das Kraftfahrzeug weit genug, nämlich um den vorbestimmten Streckenwert, vom Hindernis entfernt hat. Bei innerhalb der Parklücke durch die Sensoreinrichtung detektiertem Hindernis ist diese Ausführungsform besonders vorteilhaft für den Fall, dass das Hindernis innerhalb des Fahrschlauchs verbleibt, weil sich keine günstigere Fahrtrajektorie ermitteln oder planen lässt, obwohl der Fahrer das Kraftfahrzeug vom Hindernis wegführt.

Um den genannten Streckenwert festzulegen, sieht eine Weiterbildung des Ansatzes vor, dass in einer digitalen Karte ein vorbestimmter Bereich, hier Hysteresebereich genannt, um das Kraftfahrzeug abgegrenzt wird, also beispielsweise um die Grundfläche des Kraftfahrzeugs ein Rechteck oder ein Vieleck als Grenze des Hysteresebereichs definiert wird. Hierbei wird dann überprüft, ob sich das Hindernis außerhalb des Hysteresebereichs befindet. Dies wird dann als ausreichend großer Abstand des Hindernisses vom Kraftfahrzeug gewertet. Durch diese Weiterbildung ergibt sich der Vorteil, dass auf der Anzeigeeinheit die angezeigte Fahrtrichtung nicht in schneller Folge zwischen der Planfahrtrichtung und der Ausweichfahrtrichtung wechselt, also beispielsweise innerhalb von 10 Sekunden beispielsweise 5 mal wechselt, nur weil der gemessene Abstand des Kraftfahrzeugs vom Hindernis aufgrund von beispielsweise schwankenden Messwerten eines Messsensors entsprechend häufig einen anderen Wert aufweist.

Bei Kombinieren mehrerer der beschriebenen Wechselbedingungen kann jede davon als notwendige Bedingung vorgegeben sein, d.h. es findet nur bei Erfülltsein der jeweiligen Wechselbedingung ein Fahrtrichtungswechsel statt, aber der Fahrtrichtungswechsel ist nicht zwingend, da noch eine andere notwendige Bedingung unerfüllt sein kann. Es müssen also alle vorgegebenen notwendigen Bedingungen erfüllt sein, damit der Fahrtrichtungswechsel tatsächlich stattfindet.

In einer Ausführungsform der Erfindung ist die Ausweichfahrtrichtung der Planfahrtrichtung entgegengesetzt ausgerichtet. Hierdurch ergibt sich der Vorteil, dass das Kraftfahrzeug auf kürzestem Weg von dem Hindernis weggeführt wird und somit die problematische Situation schnellstmöglich beseitigt wird.

In einer Ausführungsform der Erfindung wird in Abhängigkeit von dem durch die Sensoreinrichtung ermittelten Abstand ein akustisches und/oder optisches Warnsignal erzeugt. Dieses Warnsignal wird also unabhängig von der angezeigten Fahrtrichtung erzeugt. Hierdurch ergibt sich der Vorteil, dass der Fahrer bei Bedarf oder auf Wunsch die angezeigte Fahrtrichtung ignorieren kann und sich dennoch am Warnsignal orientieren kann, um unassistiert das Kraftfahrzeug an dem Hindernis vorbeizuführen.

Schließlich gehört zu der Erfindung auch ein Kraftfahrzeug, welches durch eine Ausführungsform der erfindungsgemäßen Parkassistenzvorrichtung gekennzeichnet ist. Das Kraftfahrzeug ist bevorzugt als Kraftwagen, insbesondere als Lastkraftwagen oder Personenkraftwagen, ausgestaltet.

Im Folgenden ist ein Ausführungsbeispiel der Erfindung beschrieben. Bei dem im Folgenden erläuterten Ausführungsbeispiel handelt es sich um eine bevorzugte Ausführungsform der Erfindung. Bei dem Ausführungsbeispiel stellen aber die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

Hierzu zeigt:
- Fig. 1: eine schematische Darstellung einer Ausführungsform des erfindungsgemäßen Kraftfahrzeugs,
- Fig. 2: eine schematische Darstellung einer Anzeige, wie sie durch eine Anzeigeeinheit des Kraftfahrzeugs von Fig. 1 erzeugt werden kann,
- Fig. 3: eine schematische Darstellung einer weiteren Anzeige, wie sie durch eine Anzeigeeinheit des Kraftfahrzeugs von Fig. 1 erzeugt werden kann,
- Fig. 4: ein Flussdiagramm zu einer Ausführungsform des erfindungsgemäßen Verfahrens, wie sie in dem Kraftfahrzeug von Fig. 1 durchgeführt werden kann,
- Fig. 5: eine Skizze zu einer Fahrsituation, in welcher das Verfahren von Fig. 4 durchgeführt werden kann,
- Fig. 6: eine Skizze zu einer weiteren Fahrsituation, in welcher eine weitere Ausführungsform des erfindungsgemäßen Verfahrens durchgeführt werden kann,
- Fig. 7: eine Skizze zu einer gegenüber der Fig. 6 abgewandelten Fahrsituation,
- Fig. 8: eine Skizze zu einer Fahrsituation, in welcher sich ein Hindernis innerhalb einer Parklücke befindet,
- Fig. 9: eine Skizze zu der Fahrsituation von Fig. 8, während eine Ausführungsform des erfindungsgemäßen Verfahrens durchgeführt wird,
- Fig. 10: eine Skizze zu der Fahrsituation von Fig. 8, während eine weitere Ausführungsform des erfindungsgemäßen Verfahrens durchgeführt wird.

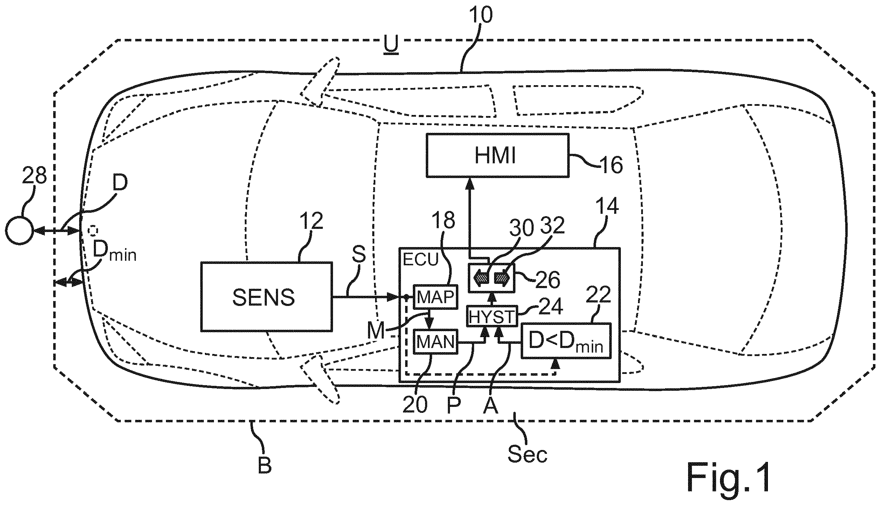

Fig. 1 zeigt ein Kraftfahrzeug 10, bei dem es sich um einen Kraftwagen, beispielsweise um einen Personenkraftwagen, handeln kann. Das Kraftfahrzeug 10 kann eine Sensoreinrichtung 12 (SENS), eine Steuereinrichtung 14 (ECU - Electronic Control Unit) und eine Anzeigeeinheit 16 (HMI - Human Machine Interface) aufweisen.

Die Sensoreinrichtung 12 kann beispielsweise einen oder mehrere Ultraschallsensoren, einen oder mehrere Radarsensoren und/oder eine oder mehrere Kameras umfassen. Die Sensoreinrichtung 12 kann dazu ausgelegt sein, eine Umgebung U des Kraftfahrzeugs 10 zu überwachen, das heißt Objekte in der Umgebung zu erfassen, d.h. mit anderen Worten Sensorsignale S zu erzeugen, die von den Objekten in der Umgebung des Kraftfahrzeugs 10 abhängig sind. Insbesondere sind die Sensorsignale S von einer Relativlage der Objekte zum Kraftfahrzeug 10 abhängig. Die Sensoreinrichtung 12 kann mit der Steuereinrichtung 14 gekoppelt sein.

Die Steuereinrichtung 14 kann ein Steuergerät oder mehrere vernetzte Steuergeräte umfassen. Die Steuereinrichtung 14 kann auch durch eine zentrale Recheneinrichtung des Kraftfahrzeugs 10 bereitgestellt sein. Durch die Steuereinrichtung 14 können eine digitale Karte 18 (MAP), eine Manöverplanungseinheit 20 (MAN), eine Überwachungseinheit 22, eine Hystereseeinrichtung 24 (HYST) und eine Anzeigensteuerung 26 bereitgestellt sein, die jeweils z.B. durch ein Programmmodul der Steuereinrichtung 14 realisiert sein können. Die Anzeigensteuerung 26 kann mit der Anzeigeeinheit 16 gekoppelt sein.

Die Anzeigeeinheit 16 kann beispielsweise einen Bildschirm in einer (nicht näher dargestellten) Mittelkonsole des Kraftfahrzeugs 10 und/oder ein Head-Up-Display einer (nicht dargestellten) Frontscheibe des Kraftfahrzeugs 10 umfassen.

Auf Grundlage der Sensorsignale S der Sensoreinrichtung 12 kann in an sich bekannter Weise in der digitalen Karte 18 die Umgebung U des Kraftfahrzeugs 10 kartographiert oder erfasst oder aufgezeichnet werden. Auf Grundlage von Kartendaten N der digitalen Karte 18 kann durch die Manöverplanungseinheit 20 in an sich bekannter Weise ein Parkmanöver geplant werden, durch welches für einen (nicht dargestellten) Fahrer des Kraftfahrzeugs 10 eine Fahrtrajektorie geplant wird, entlang welcher der Fahrer das Kraftfahrzeug 10 in eine Parklücke hineinmanövrieren oder hineinlenken oder aus dieser herausmanövrieren oder herauslenken kann.

Die Manöverplanungseinrichtung 20 signalisiert dem Fahrer eine gemäß der geplanten Fahrtrajektorie momentan oder aktuell mit dem Kraftfahrzeug 10 einzuschlagende oder zu verfolgende Fahrtrichtung, das heißt eine Planfahrtrichtung 30, indem durch die Manöverplaneinrichtung 20 ein entsprechendes Fahrtrichtungssignal P für die Anzeigensteuerung 26 ausgegeben wird. Die Anzeigensteuerung 26 stellt dann in an sich bekannter Weise den Anzeigeninhalt mit z.B. einem Symbol für die Planfahrtrichtung 30 ein.

Während der Fahrer das Parkmanöver durchführt, kann durch die Überwachungseinrichtung 22 überprüft werden, ob durch die Sensoreinrichtung 12 ein Hindernis 28 erkannt oder sensiert wird. Ein Abstand D des Hindernisses 28 zum Kraftfahrzeug 10 kann ebenfalls von der Sensoreinrichtung 12 ermittelt werden. Es kann durch die Überwachungseinrichtung 22 überprüft werden, ob der Abstand D kleiner als ein vorbestimmter Abstandswert oder Sicherheitsabstand Dmin ist. Falls der Abstand D kleiner als der Sicherheitsabstand Dmin ist, kann dem Fahrer ein Hinweis gegeben werden, dass er sein Parkmanöver unterbrechen oder ändern muss. Dies kann wie folgt realisiert werden: Der Sicherheitsabstand Dmin kann auf der Grundlage eines Sicherheitsbereichs Sec definiert sein, dessen Grenzen B um das Kraftfahrzeug 10 herum definiert sein können und beispielsweise die Form eines Rechtecks oder eines Achtecks aufweisen kann. Das Eindringen des Hindernisses 28 in den Sicherheitsbereich Sec wird dann als Unterschreiten des Sicherheitsabstands Dmin von der Überwachungseinrichtung 22 erkannt.

Falls nun die Überwachungseinrichtung 22 erkennt, dass der Abstand D zum Hindernis 28 kleiner als der Sicherheitsabstand Dmin ist, erzeugt die Überwachungseinrichtung 22 ein Ausweichsignal A für die Anzeigensteuerung 26, damit diese anstelle der Planfahrtrichtung 30 eine Ausweichfahrtrichtung 32 in bekannter Weise anzeigt.

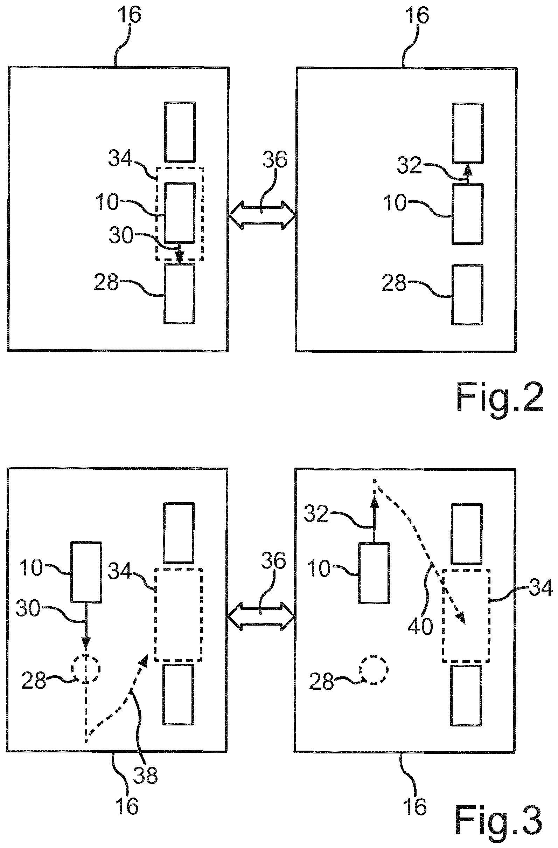

In Fig. 2 und Fig. 3 sind hierzu zwei mögliche Anzeigeninhalte oder Anzeigen dargestellt, wie sie sich dem Fahrer auf der Anzeigeeinheit 16 darstellen können. In Fig. 2 ist auf der linken Seite eine Anzeige gezeigt, die durch die Anzeigensteuerung 26 beispielsweise auf der Grundlage der Karte 18 gebildet sein kann. Das Kraftfahrzeug 10 kann in der Anzeige aus einer Vogelperspektive dargestellt sein. In der durch die Anzeigeeinheit 16 abgebildeten Fahrsituation manövriert das Kraftfahrzeug 10 in eine durch eine Parklückendetektion detektierte Parklücke 34. Gemäß der von der Manöverplanungseinrichtung 20 geplanten Fahrtrajektorie wird dem Fahrer auf der Anzeigeeinheit 16 die Planfahrtrichtung 30 z.B. als Fahrtrichtungspfeil angezeigt. Der Fahrer folgt mit dem Kraftfahrzeug 10 der Planfahrtrichtung 30 und nähert sich hierdurch einem die Parklücke 34 begrenzenden Hindernis 28, beispielsweise einem parkenden Fremdfahrzeug. Hierbei verringert sich der Abstand D zum Hindernis 28, bis er kleiner als der Sicherheitsabstand Dmin ist. Daraufhin erzeugt die Überwachungseinrichtung 22 in der beschriebenen Weise das Ausweichsignal A, durch welches ein Fahrtrichtungswechsel 36 auf der Anzeigeeinheit 26 ausgelöst wird, indem anstelle der Planfahrtrichtung 30 die Ausweichfahrtrichtung 32 angezeigt wird (rechte Anzeige). Dem Fahrer wird hierdurch signalisiert, dass er die Fahrtrichtung wechseln soll, um nicht mit dem Hindernis 28 zu kollidieren.

In Fig. 3 ist in vergleichbarer Weise gezeigt, wie das Kraftfahrzeug 10 zum Vorbereiten eines Einschwenkens in eine Parklücke 34 durch die Manöverplanvorrichtung 20 entlang einer geplanten Fahrtrajektorie 38 an der Parklücke 34 vorbei manövriert werden soll. Gemäß der geplanten Fahrtrajektorie 38 wird die Planfahrtrichtung 30 angezeigt (linke Anzeige), solange bis der Abstand D zu einem Hindernis 28 kleiner als der Sicherheitsabstand Dmin ist und die Überwachungseinrichtung 22 einen Fahrtrichtungswechsel 36 herbeiführt (rechte Anzeige), indem die Ausweichfahrtrichtung 32 als Fahrtrichtungspfeil angezeigt wird. Während der Fahrer der Ausweichfahrtrichtung 32 folgt, kann die Manöverplanungseinrichtung 20 die geplante Fahrtrajektorie 38 verändern oder anpassen, d.h. eine geänderte Fahrtrajektorie 40 ermitteln, die das Hindernis 28 berücksichtigt. Die geänderte Fahrtrajektorie 40 kann auf der Grundlage der aktuellen Position des Kraftfahrzeugs 10 nach dem Ausweichmanöver ermittelt werden.

Nach dem Fahrtrichtungswechsel 36 zum Anzeigen der Ausweichfahrtrichtung 32, wie es in Fig. 2 und Fig. 3 veranschaulicht ist, muss während oder nach dem Ausweichmanöver ab einem bestimmten Zeitpunkt wieder die Planfahrtrichtung 30 angezeigt werden, damit der Fahrer erkennt, in welche Richtung er weiter fahren muss, um der dann geplanten Fahrtrajektorie 40 zu folgen. Erfolgt dieser erneute Fahrtrichtungswechsel 36 zu früh, kann es sein, dass sich der Fahrer mit dem Kraftfahrzeug 10 noch zu nah an dem Hindernis 28 befindet und ein erneutes Führen des Kraftfahrzeugs 10 in Richtung der Planfahrtrichtung 30 erneut dazu führt, dass der Abstand D kleiner als der Sicherheitsabstand Dmin wird. Dann wird es wieder zu einem Fahrtrichtungswechsel 36 kommen.

Bei dem Kraftfahrzeug 10 ist ein solcher zu häufiger, unerwünschter Fahrtrichtungswechsel 36 vermieden, das heißt es gibt kein Flackern der Anzeige auf der Anzeigeeinheit 26 zwischen der Planfahrtrichtung 30 und der Ausweichfahrtrichtung 32. Hierzu können die Manöverplanungseinheit 20 und die Überwachungseinheit 22 über die Hystereseeinrichtung 24 mit der Anzeigensteuerung 26 gekoppelt sein. Die Hystereseeinrichtung 24 kann das Fahrtrichtungssignal P und/oder das Ausweichsignal A in Abhängigkeit von einem ersten initialen Fahrtrichtungswechsel unterdrücken, wenn zum ersten Mal der Abstand D zu einem bestimmten Hindernis 28 kleiner als der Sicherheitsabstand Dmin geworden ist. Bei diesem ersten, initialen Fahrtrichtungswechsel oder kurz initialen Wechsel kann die Hystereseeinrichtung 24 von der Überwachungseinrichtung 22 aktiviert werden.

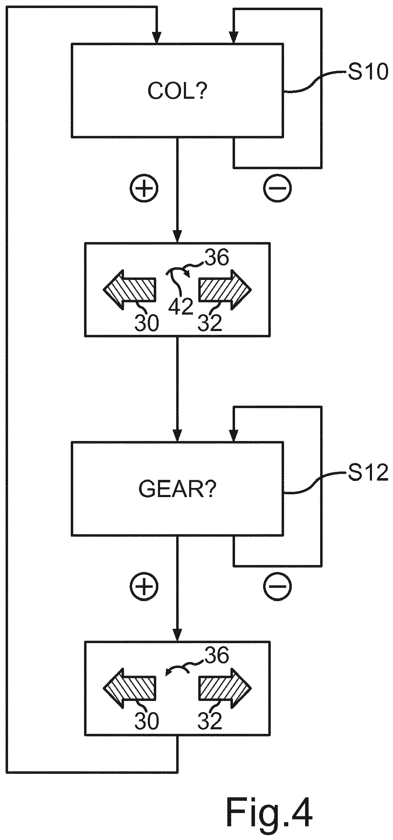

In Fig. 4 ist ein Ablauf eines Verfahrens veranschaulicht, wie er auf der Grundlage der Hystereseeinrichtung 24 realisiert werden kann. In einem Schritt S10 kann durch die Überwachungseinheit 22 in der beschriebenen Weise überprüft werden, ob eine Kollisionssituation vorliegt (COL - Collision), das heißt ob der Abstand D zu einem Hindernis 28 kleiner als der Sicherheitsabstand Dmin ist. Solange dies nicht der Fall ist (in Fig. 4 durch ein Minuszeichen "-" veranschaulicht), läuft die Überwachung weiter. Falls eine Kollisionssituation vorliegt (in Fig. 4 durch ein Pluszeichen "+" veranschaulicht), wird das Ausweichsignal A erzeugt, welches von der Hystereseeinrichtung 24 an die Anzeigensteuerung 26 weitergeleitet oder durchgelassen werden kann. Hierdurch findet der beschriebene Anzeigenwechsel oder Fahrtrichtungswechsel 36 von der Planfahrtrichtung 30 zur Ausweichfahrtrichtung 32 statt. Dieser Fahrtrichtungswechsel 36 ist ein initialer Wechsel 42, da zum ersten Mal die Kollisionssituation in Bezug auf ein bestimmtes Hindernis 28 vorliegt und das erste Mal von der Planfahrtrichtung 30 abgewichen wurde.

Der Fahrer muss im Kraftfahrzeug 10 nun den Gang eines (nicht dargestellten) Getriebes des Kraftfahrzeugs 10 wechseln, beispielsweise von einem Vorwärtsgang zu einem Rückwärtsgang oder umgekehrt, um die Fahrtrichtung zu wechseln, das heißt von der Planfahrtrichtung 30 zur Ausweichfahrtrichtung 32 wechseln zu können. Nach diesem initialen ersten Gangwechsel kann die Hystereseeinrichtung 24 in einem Schritt S12 überwachen, ob erneut der Gang (GEAR - Gang) gewechselt wird, also der Fahrer hierdurch signalisiert, dass er das Ausweichmanöver entlang der Ausweichfahrtrichtung 32 beendet hat. Der Schritt S12 stellt also das Prüfen einer Wechselbedingung dar. Solange die Wechselbedingung nicht erfüllt ist, bleibt die Ausweichfahrtrichtung 32 auf der Anzeigeeinheit 16 angezeigt. Mit anderen Worten wird das Fahrtrichtungssignal P der Manöverplanungseinheit 20 von der Hystereseeinrichtung 24 unterdrückt. Sobald der Fahrer den Gang erneut wechselt und hierdurch das Ausweichmanöver entlang der Ausweichfahrtrichtung 32 beendet, findet auf der Anzeigeeinheit 16 ein erneuter Fahrtrichtungswechsel 36 statt, das heißt es wird an Stelle der Ausweichfahrtrichtung 32 wieder die Planfahrtrichtung 30 angezeigt. Mit anderen Worten wird nun das Fahrtrichtungssignal P der Manöverplanungseinheit 20 nicht mehr unterdrückt, sondern die Manöverplanungseinheit 20 kann die Anzeigensteuerung 26 mit ihrem Fahrtrichtungssignal P gemäß der geplanten Fahrtrajektorie steuern. Ein Gangwechsel kann beispielsweise über einen Kommunikationsbus des Kraftfahrzeugs 10, z.B. einen CAN-Bus (CAN Controller Area Network) in bekannter Weise von dem Getriebe oder eine Getriebesteuerung signalisiert werden.

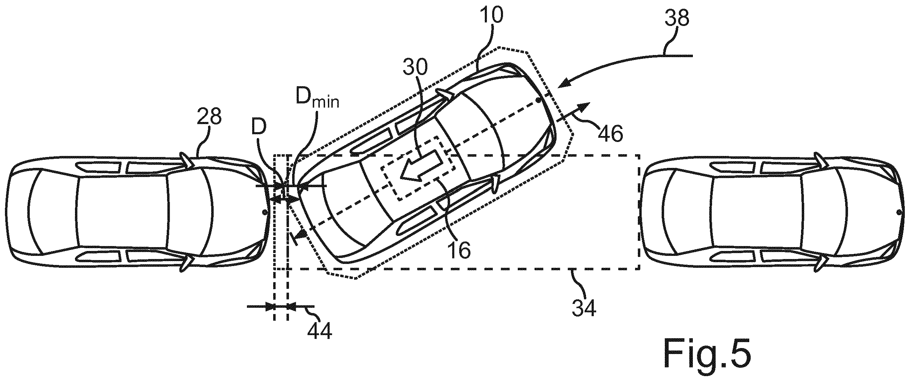

In Fig. 5 ist ein Längsparkmanöver des Kraftfahrzeugs 10 veranschaulicht, bei welchem sich das in Fig. 4 veranschaulichte Verfahren besonders bewährt hat. Gemäß einer geplanten Fahrtrajektorie 38 zeigt die Manöverplanungseinheit 20 mittels ihres Fahrtrichtungssignals P die Planfahrtrichtung 30 mittels der Anzeigeeinheit 16 an. In dem in Fig. 5 veranschaulichten Beispiel kann die Parklücke 34 falsch vermessen worden sein, da es z.B. eine Messtoleranz 44 gibt, die bei der Manöverplanung zum Planen der Fahrtrajektorie 38 nicht berücksichtigt wurde. Aus diesem Grund nähert sich der Fahrer mit dem Kraftfahrzeug 10 an ein Hindernis 28, beispielsweise ein parkendes Fremdfahrzeug, soweit an, dass der Abstand D kleiner als der Sicherheitsabstand Dmin wird. Dann wird (nicht dargestellt) ein initialer Wechsel 42 der angezeigten Fahrtrichtung in der beschriebenen Weise ausgelöst, so dass der Fahrer durch die angezeigte Ausweichfahrtrichtung 32 das Fahrzeug wieder in eine Vorwärtsfahrtrichtung 46 aus der Parklücke 34 herausmanövriert, um erneut einen Einparkversuch zu unternehmen. Während der Fahrer das Kraftfahrzeug 10 z.B. in die Vorwärtsfahrtrichtung 46 führt, wird ihm weiterhin die Ausweichfahrtrichtung 32 angezeigt. Erst wenn er außerhalb der Parklücke 34 hier wieder z.B. den Rückwärtsgang einlegt, wird dies in dem Schritt S12 durch die Hystereseeinrichtung 24 erkannt und es wird wieder die Planfahrtrichtung 30 durch einen erneuten Fahrtrichtungswechsel 36 auf der Anzeigeeinheit 16 angezeigt.

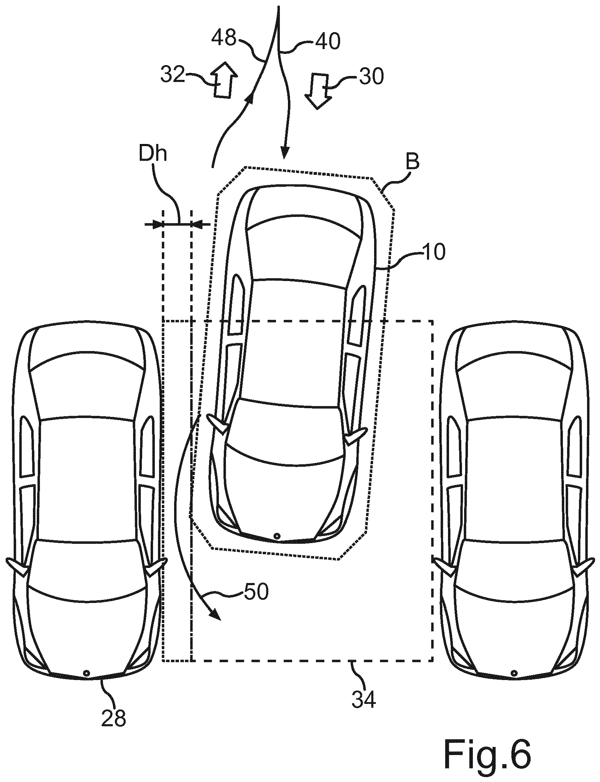

In Fig. 6 ist ein Querparkmanöver veranschaulicht. In der in Fig. 6 gezeigten Situation hatte der Fahrer des Kraftfahrzeugs 10 dieses bereits zu nahe an ein Hindernis 28, beispielsweise ein zur Parklücke 34 parallel parkendes Fremdfahrzeug, herangeführt, so dass das Hindernis 28 über die Grenze B in den Sicherheitsbereich Sec eingedrungen war. Dem Fahrer wurde daraufhin nach dem initialen Wechsel 42 die Ausweichfahrtrichtung 32 angezeigt, so dass der Fahrer das Kraftfahrzeug 10 entlang einer Ausweichstrecke 48 aus der Parklücke 34 heraus manövriert hat. Danach, beispielsweise nach einem Gangwechsel, der von der Hystereseeinrichtung 24 in dem Schritt S12 erkannt worden sein kann, oder nach Erfüllen einer anderen Wechselbedingung, z.B. einem vorbestimmten Zeitablauf oder nach einer vorbestimmten Mindestfahrstrecke, wird dem Fahrer dann wieder die Planfahrtrichtung 30 angezeigt, so dass der Fahrer das Kraftfahrzeug 10 entlang der angepassten oder geänderten Fahrtrajektorie 40 in die Parklücke 34 führen kann.

Es kann nun vorgesehen sein, dass die Hystereseeinrichtung 24 das Ausweichsignal A der Überwachungseinrichtung 22 unterdrückt. Hierbei kann die Hystereseeinrichtung 24 dann als eine Wechselbedingung zum erneuten Durchlassen des Ausweichsignals A festlegen, dass bei einer erneuten Annäherung an das Hindernis 28 nicht der Sicherheitsabstand Dmin sondern ein geänderter Abstandswert Dh, ein Hystereseabstand, unterschritten wird. Die Hystereseeinrichtung 24 kann hierzu den Abstandswert Dh in der Überwachungseinrichtung 22 festlegen oder einstellen. Der Hystereseabstand Dh kann größer oder kleiner als der Sicherheitsabstand Dmin sein.

Ein Hystereseabstand Dh, der kleiner als der Sicherheitsabstand Dmin ist, weist den Vorteil auf, dass der Fahrer das Kraftfahrzeug 10 in einer Bogenfahrt 50 enger als der Sicherheitsabstand Dmin am Hindernis 28 vorbeiführen kann, und dennoch dem Fahrer durchgehend die Planfahrtrichtung 30 angezeigt wird.

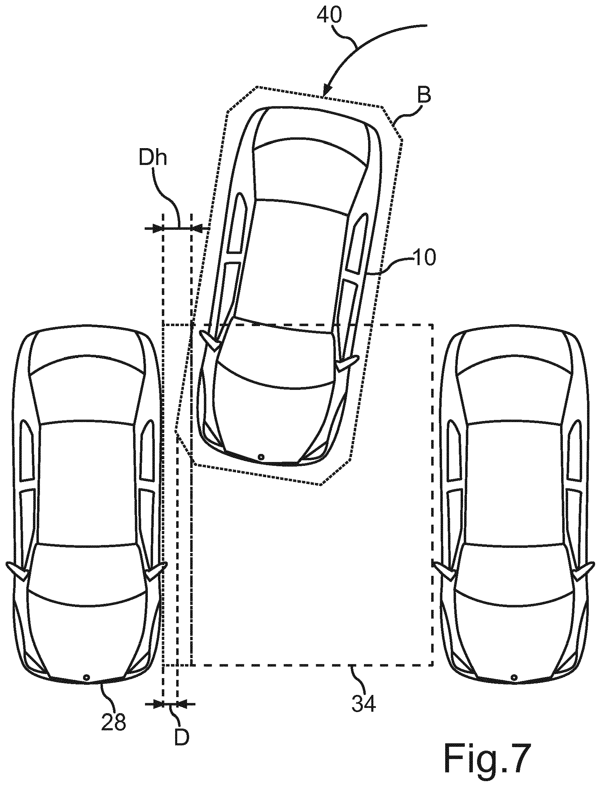

Wie in Fig. 7 veranschaulicht, weist ein Hystereseabstand Dh, der größer als der Sicherheitsabstand Dmin ist, den Vorteil auf, dass der Fahrer bereits beim erneuten Hineinführen des Kraftfahrzeugs 10 in die Parklücke 34 zu einer weiteren Manöverkorrektur veranlasst wird, damit der Fahrer nicht erst zu tief in die Querparklücke hinein fährt, bevor er erneut feststellt, dass er noch einmal ein Ausweichmanöver fahren muss.

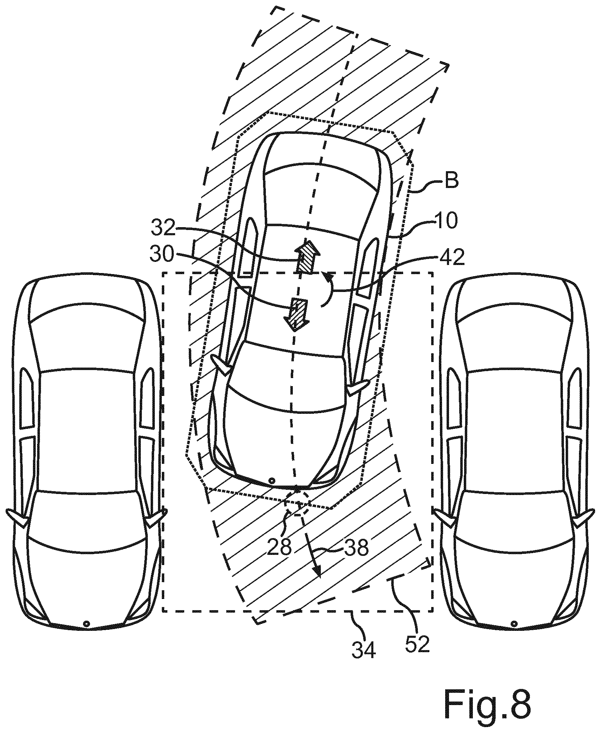

In Fig. 8 ist ein Parkmanöver veranschaulicht, bei welchem sich ein Hindernis 28 innerhalb der Parklücke 34 befindet. Bei dem Hindernis 28 kann es sich beispielsweise um einen Ball oder einen in die Parklücke 34 gelaufenen Hund handeln. In Fig. 8 ist zu der geplanten Fahrtrajektorie 38 noch ein sich ergebender Fahrschlauch 52 dargestellt, wie er beispielsweise anhand der Karte 18 in bekannter Weise ermittelt werden kann. Während der Fahrer das Kraftfahrzeug 10 in die Parklücke 34 entlang der ursprünglich geplanten Fahrtrajektorie 38 führt, wird dem Fahrer mittels der Anzeigeeinheit 16 die Planfahrtrichtung 30 angezeigt. Sobald das Hindernis 28 die Grenze B des Sicherheitsbereichs Sec durchdringt, d.h. der Sicherheitsabstand Dmin unterschritten ist, findet in der beschriebenen Weise der initiale Wechsel 42 zur Anzeige der Ausweichfahrtrichtung 32 beispielsweise entgegen der Planfahrtrichtung 30 statt. Der Fahrer kann nun das Kraftfahrzeug 10 wieder aus der Parklücke 34 herausführen und hierdurch den Abstand zum Hindernis 28 vergrößern. Nun kann vorgesehen sein, dass durch die mit dem initialen Wechsel 42 aktivierte Hystereseeinrichtung 24 gemäß dem Schritt S12 abgewartet wird, bis der Fahrer wieder den Gang des Getriebes wechselt und hierdurch signalisiert, dass er bereit ist, erneut von der Manöverplanungseinheit 20 in die Parklücke 34 geführt zu werden. Erst dann würde wieder die Planfahrtrichtung 30 in der beschriebenen Weise angezeigt.

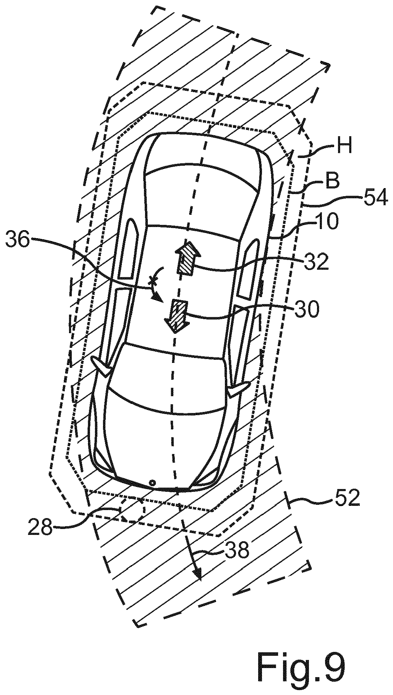

Alternativ dazu kann die Hystereseeinrichtung 24 aber gemäß der Fig. 9 auf andere Weise ermitteln, wann wieder das Plansignal P der Manöverplanungseinheit 20 angezeigt wird. Es kann also eine andere Wechselbedingung zusätzlich oder alternativ zum Schritt S12 vorgesehen sein. Es kann vorgesehen sein, dass zusätzlich zum Sicherheitsbereich Sec ein Hysteresebereich H definiert wird, dessen Grenze 54 einen größeren Abstand vom Kraftfahrzeug 10 aufweist als die Grenze B des Sicherheitsbereichs Sec. Der Abstand der Grenze 54 kann z.B. in einem Bereich von 30cm bis 2m liegen. Beispielsweise kann der Hysteresebereich H mit der Grenze 54 ein Rechteck oder ein Achteck um das Kraftfahrzeug 10 herum beschreiben.

Während der Fahrer bei angezeigter Ausweichfahrtrichtung 32 das Kraftfahrzeug 10 wieder aus der Parklücke 34 herausführt, kann durch die Hystereseeinrichtung 24 ein erneuter Fahrtrichtungswechsel 36 zur Planfahrtrichtung 30 blockiert werden, solange sich das Hindernis 28 noch im Hysteresebereich H befindet. Durch Festlegen einer Grenze 54 kann bewirkt werden, dass auf der Anzeigeeinheit 16 der Fahrtrichtungswechsel 36 zurück zur Planfahrtrichtung 30 nicht zu früh erfolgt, sondern der Fahrer zunächst mit dem Kraftfahrzeug 10 einen ausreichend großen Abstand vom Hindernis 28 bekommt. Hierdurch kann bewirkt werden, dass die Manöverplanungseinheit 20 eine geänderte Fahrtrajektorie 40 ermitteln kann, bei welcher der Fahrschlauch 52 an dem Hindernis 28 vorbeiführt.

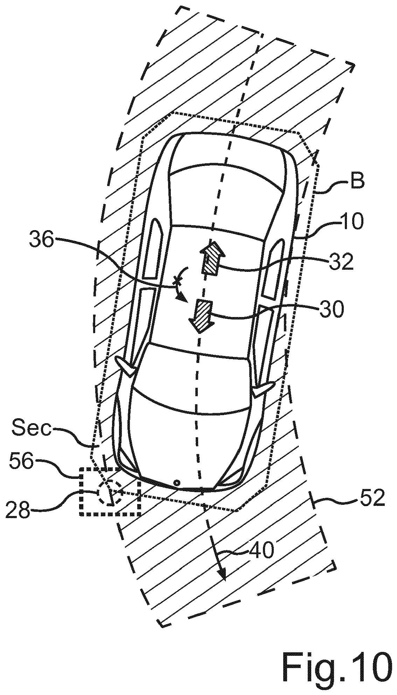

In Fig. 10 ist veranschaulicht, wie diese geänderte Fahrtrajektorie 40 mit einem sich daraus ergebenden Fahrschlauch 52 daraufhin überprüft werden kann, ob sie an dem Hindernis 28 vorbeiführt. Hierbei kann berücksichtigt werden, dass das Hindernis 28 sich bewegen könnte oder größer sein könnte, als durch die Sensorsignale S bei der ersten Annäherung erfasst werden konnte. Hierzu kann eine Hysteresebox 56 um eine Position des Hindernisses 28 herum definiert werden, beispielsweise auf der Grundlage der Karte 18. Während der Fahrer das Kraftfahrzeug 10 entlang der Ausweichfahrtrichtung 32 fährt, wird ihm die Ausweichfahrtrichtung 30 durchgehend angezeigt, bis der Fahrschlauch 52 der (wiederholt oder periodisch) geänderten Fahrtrajektorie 40 nicht mehr die Hysteresebox 56 schneidet. Dies stellt ebenfalls das Überprüfen einer Wechselbedingung dar. Ist diese Wechselbedingung, so kann von der Hystereseeinrichtung 24 wieder das Fahrtrichtungssignal P zur Anzeigensteuerung 26 durchgelassen werden.

Insgesamt kann durch die Hystereseeinrichtung 24 erreicht werden, dass nachdem die Information zum Fahrtrichtungswechsel erneut erzeugt wurde und solange kein zusätzlicher Fahrtrichtungswechsel durch Gangwechsel erfolgt (Schritt S12) ein Unterdrücken eines erneuten Erzeugens einer Information zum Fahrtrichtungswechsel stattfindet. Hierdurch kann erreicht werden, dass z.B. der gerade Pfeil im Piktogramm auf der Anzeigeeinheit 16 nicht hin und her (von vorwärts auf rückwärts oder umgekehrt) springt (Vermeidung von Flickern/Flackern). Der Fahrer wird so nicht unnötig verwirrt, das heißt das Mensch-Maschine-Interface, wie es durch die Anzeigeeinheit 16 gebildet ist, wird stabilisiert.

In einer erfindungsgemäßen Ausgestaltung, wie sie in Fig. 6 und Fig. 7 veranschaulicht ist, kann das Unterdrücken zusätzlich stattfinden, solange ein Abstand zum Objekt unter einem geänderten Schwellwert ist, insbesondere kleiner ist als der bestimmte Schwellwert zur Kollisionsdetektion, das heißt des Sicherheitsabstands Dmin.

In einer weiteren Ausgestaltung, wie sie in Fig. 8 bis Fig. 10 veranschaulicht ist, kann das Unterdrücken zusätzlich oder alternativ davon abhängig sein, ob ein Objekt zusätzlich im Fahrschlauch liegt, das heißt ein nicht Parklücken begrenzendes Objekt vorhanden ist, insbesondere ob ein Objekt in einem erweiterten Eckbereich des Fahrschlauchs liegt. Erfindungsgemäß kann auch in einer Ausgestaltung die bei der Parklückenvermessung berechnete Fahrtrjaketorie (Bahnplanung) geändert werden. Insbesondere kann ein neues Trajektoriensegment (in die andere, entgegengesetzte Fahrtrichtung) berechnet werden, wenn ein Gangwechsel erfolgt.

Die Hystereseeinrichtung 24 stellt aber nur ein Beispiel dar, um die beschriebene Implementierung einer Unterdrückung eines Fahrtrichtungswechsels 36 und die Überwachung einer Wechselbedingung in der Steuereinrichtung 14 zu realisieren. Allgemein können bei der Erfindung die beschriebenen Funktionen der Hystereseeinrichtung 24 z.B. auch durch die Karte 18, die Manöverplanungseinheit 20, die Überwachungseinheit 22 und/oder die Anzeigensteuerung 26 bereitgestellt sein.

Insgesamt zeigt das Beispiel, wie durch die Erfindung Fahrhinweise für ein automatisches Parksystem berechnet werden können.

## Patentansprüche

1. Verfahren zum Bereitstellen von Fahrhinweisen für einen Fahrer eines Kraftfahrzeugs (10) während eines Parkmanövers in einer Parklücke (34),
mit den Schritten:
- Planen einer das Parkmanöver beschreibenden Fahrtrajektorie (38) durch eine Manöverplanungseinheit (20) einer Steuereinrichtung (14),
- Anzeigen einer in Abhängigkeit von der geplanten Fahrtrajektorie (38) ermittelten Planfahrtrichtung (30) mittels einer Anzeigeeinheit (16) durch die Manöverplanungseinheit (20),
- Erfassen eines Abstands (D) des Kraftfahrzeugs (10) zu einem innerhalb und/oder neben der Parklücke (34) befindlichen Hindernis (28) mittels einer Sensoreinrichtung (12), während der Fahrer das Kraftfahrzeug (10) in die angezeigte Fahrtrichtung führt,
- initiales Wechseln (42) der mittels der Anzeigeeinheit (16) angezeigten Fahrtrichtung von der Planfahrtrichtung (30) zu einer Ausweichfahrtrichtung (32) durch eine Überwachungseinheit (22) der Steuereinrichtung (14), falls der erfasste Abstand (D) einen vorbestimmten Abstandswert (Dmin) unterschreitet,
wobei durch die Steuereinrichtung (14) nach dem initialen Wechsel (42) zumindest ein vorbestimmter weiterer von der Manöverplanungseinheit (20) und/oder der Überwachungseinheit (22) signalisierter Wechsel (36) der angezeigten Fahrtrichtung unterdrückt wird.
**dadurch gekennzeichnet, dass**
der signalisierte Wechsel (36) der angezeigten Fahrtrichtung solange unterdrückt wird, bis zumindest eine vorbestimmte Wechselbedingung erfüllt ist (S12).

2. Verfahren nach Anspruch 1,
**dadurch gekennzeichnet, dass**
als Wechselbedingung zumindest überprüft wird, ob durch ein Getriebe des Kraftfahrzeugs (10) ein vorbestimmter Gangwechsel zwischen einem Vorwärtsgang und einem Rückwärtsgang signalisiert wird (S12), wobei erst ab dem Gangwechsel wieder durch die Manöverplanungseinheit (20) die Planfahrtrichtung (30) angezeigt wird.

3. Verfahren nach Anspruch 1 oder 2,
**dadurch gekennzeichnet, dass**
nach dem initialen Wechsel (42) durch die Überwachungseinheit (22) in Bezug auf das Hindernis (28) ein veränderter, insbesondere ein verringerter, Abstandswert (Dh) zugrunde gelegt wird und hierdurch als Wechselbedingung zumindest überprüft wird, ob der erfasste Abstand (D) den veränderten Abstandswert (Dmin) unterschreitet, und erst ab dem Erfülltsein dieser Wechselbedingung durch die Überwachungseinheit (22) ein erneuter Wechsel zu der Ausweichfahrtrichtung (32) signalisiert wird.

4. Verfahren nach einem der Ansprüche 1 bis 3,
**dadurch gekennzeichnet, dass**
als Wechselbedingung zumindest überprüft wird, ob die nach dem initialen Wechsel (42) angezeigte Ausweichfahrtrichtung (32) für eine vorbestimmte Mindestzeitdauer angezeigt worden ist.

5. Verfahren nach einem der Ansprüche 1 bis 4,
**dadurch gekennzeichnet, dass**
durch die Manöverplanungseinheit (20) die Fahrtrajektorie (38) in Abhängigkeit von einer aktuellen Position des Kraftfahrzeugs angepasst wird und bei innerhalb der Parklücke (34) angeordnetem Hindernis (28) als Wechselbedingung zumindest überprüft wird, ob das Hindernis (28) außerhalb eines sich gemäß der aktuell geplanten Fahrtrajektorie (40) ergebenden Fahrschlauchs (52) angeordnet ist, und nur bei Erfülltsein dieser Wechselbedingung wieder die Planfahrtrichtung (30) durch die Manöverplanungseinheit (20) angezeigt wird.

6. Verfahren nach Anspruch5,
**dadurch gekennzeichnet, dass**
zum Überprüfen, ob das Hindernis (28) außerhalb des Fahrschlauchs (52) angeordnet ist, als eine Größe des Hindernisses (28) eine vorbestimmte Form, insbesondere ein Rechteck (56), zugrunde gelegt wird.

7. Verfahren nach einem der Ansprüche 1 bis 6,
**dadurch gekennzeichnet, dass**
bei innerhalb der Parklücke (34) angeordnetem Hindernis (28) als Wechselbedingung zumindest überprüft wird, ob eine von dem Kraftfahrzeug (10) nach dem initialen Wechsel (42) zurückgelegte Rollstrecke größer als ein vorbestimmter Streckenwert ist, und nur bei Erfülltsein dieser Wechselbedingung wieder die Planfahrtrichtung (30) durch die Manöverplanungseinheit (20) angezeigt wird.

8. Verfahren nach Anspruch 7,
**dadurch gekennzeichnet, dass**
wobei der Streckenwert festgelegt wird, indem in einer digitalen Karte (18) ein vorbestimmter Hysteresebereich (H) um das Kraftfahrzeug (10) abgegrenzt wird, wobei als die rollstreckenbezogene Wechselbedingung überprüft wird, ob sich das Hindernis (28) außerhalb des Hysteresebereichs (H) befindet.

9. Verfahren nach einem der vorhergehenden Ansprüche,
**dadurch gekennzeichnet, dass**
die Ausweichfahrtrichtung (32) der Planfahrtrichtung (30) entgegengesetzt ausgerichtet ist.

10. Verfahren nach einem der vorhergehenden Ansprüche,
**dadurch gekennzeichnet, dass**
in Abhängigkeit von dem durch die Sensoreinrichtung (12) ermittelten Abstand (D) ein akustisches und/oder optisches Warnsignal erzeugt wird.

11. Parkassistenzvorrichtung für ein Kraftfahrzeug (10), aufweisend
- eine Sensoreinrichtung (12) zum Erfassen eines Abstands (D) zu einem fahrzeugexternen Hindernis (28),
- eine Steuereinrichtung (14), die eine Manöverplanungseinheit (20), eine Überwachungseinheit (22) aufweist,
- einen Steuerausgang zum Koppeln der Parkassistenzvorrichtung (14) mit einer Anzeigeeinheit (16),
**dadurch gekennzeichnet, dass**
die Steuereinrichtung (14) dazu ausgelegt ist, ein Verfahren nach einem der vorhergehenden Ansprüche durchzuführen.

12. Kraftfahrzeug (10) mit einer Parkassistenzvorrichtung nach Anspruch 11.

## Claims

1. Method for providing driving instructions for a driver of a motor vehicle (10) during a parking manoeuvre in a parking space (34), having the steps of:
- planning a driving trajectory (38) which describes the parking manoeuvre by means of a manoeuvre planning unit (20) of a control device (14),
- using a display unit (16) to display a planned direction of travel (30) determined on the basis of the planned driving trajectory (38) by means of the manoeuvre planning unit (20),
- capturing a distance (D) between the motor vehicle (10) and an obstacle (28) inside and/or beside the parking space (34) by means of a sensor device (12) while the driver is driving the motor vehicle (10) in the displayed direction of travel,
- initially changing (42) the direction of travel displayed by means of the display unit (16) from the planned direction of travel (30) to an avoidance direction of travel (32) by means of a monitoring unit (22) of the control device (14) if the captured distance (D) undershoots a predetermined distance value (Dmin),
wherein, after the initial change (42), at least one predetermined further change (36) of the displayed direction of travel, as signalled by the manoeuvre planning unit (20) and/or the monitoring unit (22), is suppressed by the control device (14),
**characterized in that**
the signalled change (36) of the displayed direction of travel is suppressed until at least one predetermined change condition has been met (S12) .

2. Method according to Claim 1,
**characterized in that**
as the change condition, a check is at least carried out in order to determine whether a predetermined gear change between a forward gear and a reverse gear is signalled (S12) by a transmission of the motor vehicle (10), wherein the planned direction of travel (30) is displayed by the manoeuvre planning unit (20) again only after the gear change.

3. Method according to Claim 1 or 2,
**characterized in that**
after the initial change (42), a changed distance value, in particular a reduced distance value (Dh), is taken as a basis by the monitoring unit (22) with respect to the obstacle (28) and, as a result a check is at least carried out as the change condition in order to determine whether the captured distance (D) undershoots the changed distance value (Dmin), and a new change to the avoidance direction of travel (32) is signalled by the monitoring unit (22) only after this change condition has been met.

4. Method according to one of Claims 1 to 3,
**characterized in that**
as the change condition, a check is at least carried out in order to determine whether the avoidance direction of travel (32) displayed after the initial change (42) has been displayed for a predetermined minimum period.

5. Method according to one of Claims 1 to 4,
**characterized in that**
the driving trajectory (38) is adapted by the manoeuvre planning unit (20) on the basis of a current position of the motor vehicle, and, if an obstacle (28) is arranged inside the parking space (34), a check is at least carried out as the change condition in order to determine whether the obstacle (28) is arranged outside a driving path (52) resulting according to the currently planned driving trajectory (40), and the planned direction of travel (30) is displayed by the manoeuvre planning unit (20) again only if this change condition has been met.

6. Method according to Claim 5,
**characterized in that**
in order to check whether the obstacle (28) is arranged outside the driving path (52), a predetermined shape, in particular a rectangle (56), is taken as a basis as a variable of the obstacle (28).

7. Method according to one of Claims 1 to 6,
**characterized in that**
if an obstacle (28) is arranged inside the parking space (34), a check is at least carried out as the change condition in order to determine whether a rolling path covered by the motor vehicle (10) after the initial change (42) is greater than a predetermined path value, and the planned direction of travel (30) is displayed by the manoeuvre planning unit (20) again only if this change condition has been met.

8. Method according to Claim 7,
**characterized in that**
the path value is determined by delimiting a predetermined hysteresis region (H) around the motor vehicle (10) in a digital map (18), wherein a check is carried out as the change condition based on the rolling path in order to determine whether the obstacle (28) is outside the hysteresis region (H).

9. Method according to one of the preceding claims,
**characterized in that**
the avoidance direction of travel (32) is oriented in the opposite direction to the planned direction of travel (30).

10. Method according to one of the preceding claims,
**characterized in that**
an acoustic and/or optical warning signal is generated on the basis of the distance (D) determined by the sensor device (12).

11. Parking assistance apparatus for a motor vehicle (10), having
- a sensor device (12) for capturing a distance (D) to an obstacle (28) outside the vehicle,
- a control device (14) having a manoeuvre planning unit (20) and a monitoring unit (22),
- a control output for coupling the parking assistance apparatus (14) to a display unit (16), **characterized in that**
the control device (14) is designed to carry out a method according to one of the preceding claims.

12. Motor vehicle (10) having a parking assistance apparatus according to Claim 11.

## Revendications

1. Procédé de fourniture d'instructions de conduite pour un conducteur d'un véhicule automobile (10) pendant une manoeuvre de stationnement dans un emplacement de stationnement (34), comprenant les étapes suivantes :
- planification d'une trajectoire de déplacement (38) qui décrit la manoeuvre de stationnement par une unité de planification de manoeuvre (20) d'un dispositif de commande (14),
- affichage, au moyen d'une unité d'affichage (16) par l'unité de planification de manoeuvre (20), d'une direction de déplacement planifiée (30) déterminée en fonction de la trajectoire de déplacement (38),
- détection d'un écart (D) entre le véhicule automobile (10) et un obstacle (28) qui se trouve à l'intérieur et/ou à côté de l'emplacement de stationnement (34) au moyen d'un dispositif de détection (12) pendant que le conducteur guide le véhicule automobile (10) dans la direction de déplacement affichée,
- changement initial (42) de la direction de déplacement affichée au moyen de l'unité d'affichage (16) de la direction de déplacement planifiée (30) en une direction de déplacement d'évitement (32) par une unité de surveillance (22) du dispositif de commande (14) dans le cas où l'écart (D) détecté devient inférieur à une valeur d'écart (Dmin) prédéfinie, au moins un changement (36) supplémentaire signalé de la direction de déplacement affichée par l'unité de planification de manoeuvre (20) et/ou l'unité de surveillance (22) étant inhibé par le dispositif de commande (14) après le changement initial (42), **caractérisé en ce que**
le changement (36) signalé de la direction de déplacement affichée est inhibé jusqu'à ce qu'au moins une condition de changement prédéfinie soit satisfaite (S12) .

2. Procédé selon la revendication 1, **caractérisé en ce que** la condition de changement est au moins un contrôle visant à vérifier si un changement de rapport prédéfini entre un rapport de marche avant et un rapport de marche arrière est signalé (S12) par une boîte de vitesses du véhicule automobile (10), l'affichage de la direction de déplacement planifiée (30) par l'unité de planification de manoeuvre (20) ne se poursuivant de nouveau qu'à partir du changement de rapport.

3. Procédé selon la revendication 1 ou 2, **caractérisé en ce qu'**après le changement initial (42) par l'unité de surveillance (22), une valeur d'écart (Dh) modifiée en référence à l'obstacle (28), notamment réduite, est adoptée et, de ce fait, la condition de changement consiste au moins à vérifier si l'écart (D) détecté est inférieur à la valeur d'écart (Dmin) modifiée, et un nouveau changement par rapport à la direction de déplacement d'évitement (32) n'est signalé qu'après que cette condition de changement a été satisfaite par l'unité de surveillance (22).

4. Procédé selon l'une des revendications 1 à 3, **caractérisé en ce que** la condition de changement consiste au moins à vérifier si la direction de déplacement d'évitement (32) affichée après le changement initial (42) a été affichée pendant une durée minimale prédéfinie.

5. Procédé selon l'une des revendications 1 à 4, **caractérisé en ce que** la trajectoire de déplacement (38) est adaptée par l'unité de planification de manoeuvre (20) en fonction d'une position actuelle du véhicule automobile et, en présence d'un obstacle (28) disposé à l'intérieur de l'emplacement de stationnement (34), la condition de changement consiste au moins à vérifier si l'obstacle (28) est disposé en-dehors d'un couloir de déplacement (52) résultant conformément à la trajectoire de déplacement (40) actuellement planifiée, et la direction de déplacement planifiée (30) n'est de nouveau affichée par l'unité de planification de manoeuvre (20) que lorsque cette condition de changement est satisfaite.

6. Procédé selon la revendication 5, **caractérisé en ce qu'**une forme prédéfinie, notamment un rectangle (56), sert de base en tant que grandeur de l'obstacle (28) pour vérifier si l'obstacle (28) est disposé en-dehors du couloir de déplacement (52).

7. Procédé selon l'une des revendications 1 à 6, **caractérisé en ce qu'**en présence d'un obstacle (28) disposé à l'intérieur de l'emplacement de stationnement (34), la condition de changement consiste à vérifier au moins si un segment de roulage parcouru par le véhicule automobile (10) après le changement initial (42) est plus grand qu'une valeur de segment prédéfinie, et la direction de déplacement planifiée (30) n'est de nouveau affichée par l'unité de planification de manoeuvre (20) que lorsque cette condition de changement est satisfaite.

8. Procédé selon la revendication 7, **caractérisé en ce que** la valeur du segment est fixée **en ce qu'**une zone d'hystérésis (H) est délimitée autour du véhicule (10) dans une carte numérique (18), la condition de changement en rapport avec le segment de roulage consistant à vérifier si l'obstacle (28) se trouve en-dehors de la zone d'hystérésis (H).

9. Procédé selon l'une des revendications précédentes, **caractérisé en ce que** la direction de déplacement d'évitement (32) est orientée en sens inverse de la direction de déplacement planifiée (30).

10. Procédé selon l'une des revendications précédentes, **caractérisé en ce qu'**un signal d'alerte sonore et/ou visuel est généré en fonction de l'écart (D) déterminé par le dispositif de détection (12).

11. Système d'assistance au stationnement pour un véhicule automobile (10), comprenant
- un dispositif de détection (12) destiné à détecter un écart (D) par rapport à un obstacle (28) externe au véhicule,
- un dispositif de commande (14) qui possède une unité de planification de manoeuvre (20) et une unité de surveillance (22),
- une sortie de commande destinée à connecter le système d'assistance au stationnement (14) à une unité d'affichage (16),
**caractérisé en ce que**
le dispositif de commande (14) est conçu pour mettre en oeuvre un procédé selon l'une des revendications précédentes.

12. Véhicule automobile (10) équipé d'un système d'assistance au stationnement selon la revendication 11.
